(19) Europäisches Patentamt
European Patent Office
Office européen des brevets

(11) EP 2 602 547 A1

(12) EUROPEAN PATENT APPLICATION
published in accordance with Art. 153(4) EPC

(43) Date of publication:
**12.06.2013 Bulletin 2013/24**

(21) Application number: **11814227.2**

(22) Date of filing: **02.06.2011**

(51) Int Cl.:
***F23K 5/12*** $^{(2006.01)}$ ***C10L 1/32*** $^{(2006.01)}$
***F02D 19/12*** $^{(2006.01)}$ ***F02D 25/02*** $^{(2006.01)}$

(86) International application number:
**PCT/JP2011/003107**

(87) International publication number:
**WO 2012/017587 (09.02.2012 Gazette 2012/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2010 JP 2010176564**

(71) Applicant: **Kawasaki Jukogyo Kabushiki Kaisha**
**Kobe-shi, Hyogo 650-8670 (JP)**

(72) Inventors:
- **TOYODA, Takeshi**
**Hyogo 650-8670 (JP)**
- **KAKAMU, Koki**
**Hyogo 650-8670 (JP)**
- **HIGASHIDA, Masanori**
**Hyogo 650-8670 (JP)**

(74) Representative: **Leinweber & Zimmermann**
**European Patent Attorneys**
**Patentanwälte**
**Rosental 7**
**80331 München (DE)**

# (54) SPECIFIC GRAVITY MONITORING CONTROL DEVICE AND FUEL SUPPLY APPARATUS PROVIDED WITH SAME

(57) The present invention provides a specific gravity monitoring controller capable of, when adding water to fuel oil to produce a water-emulsion fuel, measuring and monitoring a specific gravity of the fuel oil to be actually used, the specific gravity monitoring controller being configured to realize the production of a water-emulsion fuel having an accurate target water addition weight ratio by adjusting the amount of water added to the fuel oil by using the obtained specific gravity of the fuel oil.

The present invention is configured to realize the production of the water-emulsion fuel having a desired, accurate target water addition weight ratio $T\gamma$ in such a manner that: the specific gravity of the fuel oil is measured by a first specific gravity measuring portion (21) when adding the water to the fuel oil to produce an emulsion of the fuel oil; a calculation is performed by using a first measured specific gravity go measured and obtained by the first specific gravity measuring portion (21); and the amount of water added to the fuel oil is adjusted based on the result of the calculation.

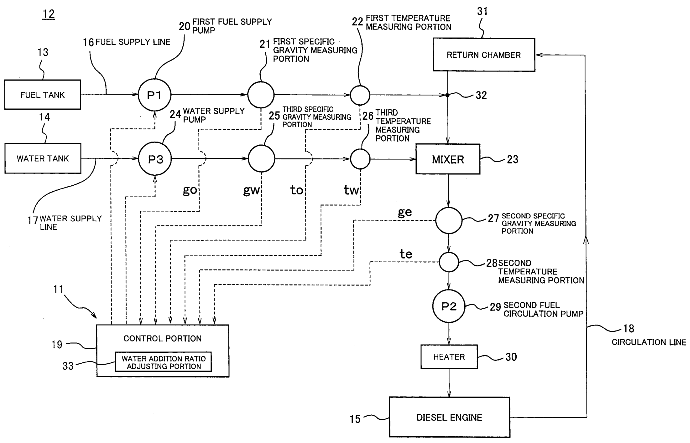


EP 2 602 547 A1

## Description

### Technical Field

The present invention relates to a specific gravity monitoring controller configured to realize the production of a water-emulsion fuel having a desired target water addition weight ratio by, when adding water to fuel oil to produce the water-emulsion fuel, measuring the specific gravity of the fuel oil to be actually used and adjusting the amount of water added to the fuel oil by using the obtained specific gravity of the fuel oil, and a fuel supply apparatus including the specific gravity monitoring controller.

### Background Art

As one technology for reducing $NO_X$ in an exhaust gas of an internal combustion engine, there is a water-emulsion fuel obtained by mixing and stirring fuel oil and water. It is generally confirmed that the $NO_X$ components in the exhaust gas can be reduced by using the water-emulsion fuel as the fuel of the internal combustion engine. The water-emulsion fuel is also applicable to diesel engines of ships.

In the technology for reducing the $NO_X$ in the exhaust gas by using the water-emulsion fuel, it is known that a $NO_X$ reduction effect and a combustion efficiency (fuel consumption rate) change depending on the addition ratio of the water added to the fuel oil. In addition, there is a restriction that the total of the flow rate of the fuel oil (pure fuel) supplied to the internal combustion engine and the flow rate of the water added to the fuel oil must not exceed, for example, a rated supply flow rate of a fuel supply apparatus and accompanying devices.

Here, although not shown, as one example of such a water-emulsion fuel supply device, PTL 1 discloses a fuel supply apparatus configured to supply the water-emulsion fuel to a diesel engine of an automobile. This fuel supply apparatus is configured such that: a return water-emulsion fuel drained from a fuel injection valve is stored in a return reservoir; and after that, the water-emulsion fuel is returned to the fuel injection valve to be reutilized.

In addition, this fuel supply apparatus is configured to: calculate and obtain the ratio of the water in the water-emulsion fuel in the return reservoir when the return water-emulsion fuel is stored in the return reservoir; cause an emulsion controller to determine the amount of fuel oil supplied to a mixer and the amount of supplied water based on the obtained ratio of the water; and control the ratio of the water at all times to change the ratio of the water to an optimal ratio in accordance with an operation load and the like.

Here, in order to calculate and obtain the ratio of the water in the water-emulsion fuel in the return reservoir, at least the specific gravity of the fuel oil is required, but a method of obtaining the specific gravity of the fuel oil is not described in PTL 1. However, since this fuel supply apparatus is used for the diesel engine of the automobile, and the fuel oil having a certain level of quality is used, a standard value is thought to be used as the specific gravity of the fuel oil.

### Citation List

### Patent Literature

PTL 1: Japanese Laid-Open Patent Application Publication No. 9-250736

### Summary of Invention

### Technical Problem

However, in the above conventional fuel supply apparatus, in a case where the standard value is used as the specific gravity of the fuel oil, but the actual specific gravity of the fuel oil is largely different from the standard value, the fuel supply apparatus calculates an inaccurate ratio of the water and cannot control the ratio of the water in accordance with the operation load and the like to change the ratio of the water to the optimal ratio.

Then, in a case where such a fuel supply apparatus is applied to, for example, an internal combustion engine of a ship, and a case where plural types of fuel oil having different properties are put in this ship at various regions and the ship uses the plural types of fuel oil having various specific gravities or a case where the ship uses the mixture of the plural types of fuel oil having various specific gravities, the water-emulsion fuel having a desired accurate ratio of water cannot be produced.

Therefore, the conventional fuel supply apparatus cannot operate, for example, the internal combustion engine, configured to use the water-emulsion fuel, with appropriate, stable combustion efficiency and cannot effectively reduce the $NO_X$ components in the exhaust gas.

Further, in a case where the conventional fuel supply apparatus produces the water-emulsion fuel having a predetermined ratio of water, and the specific gravity of the fuel oil is high, the flow rate of supplied water increases, and the total of the flow rate of the fuel oil and the flow rate of the supplied water may exceed the rated supply flow rate of the fuel supply apparatus. If this occurs, the fuel supply apparatus and accompanying devices cannot be operated appropriately. Thus, as with the above, the conventional fuel supply apparatus may not be able to operate, for example, the internal combustion engine, configured to use the water-emulsion fuel, with appropriate, stable combustion efficiency and may not be able to effectively reduce the $NO_X$ components in the exhaust gas.

The present invention was made to solve the above problems, and an object of the present invention is to provide a specific gravity monitoring controller capable of, when adding water to fuel oil to produce a water-emulsion fuel, measuring and monitoring the specific gravity of the fuel oil to be actually used, the specific gravity monitoring controller being configured to realize the production of a water-emulsion fuel having a desired accurate water addition weight ratio (ratio of the weight of water to the weight of fuel oil) by adjusting the amount of water added to the fuel oil by using the obtained specific gravity of the fuel oil, and a fuel supply apparatus including the specific gravity monitoring controller.

## Solution to Problem

A specific gravity monitoring controller according to the present invention includes a first specific gravity measuring unit configured to measure a specific gravity of fuel oil when adding water to the fuel oil to produce an emulsion of the fuel oil, wherein the specific gravity monitoring controller realizes production of a water-emulsion fuel having a desired target water addition weight ratio by adjusting an amount of the water added to the fuel oil or adjusting both an amount of the fuel oil and the amount of the water by using the first measured specific gravity measured and obtained by the first specific gravity measuring unit.

According to the specific gravity monitoring controller of the present invention, when adding the water to the fuel oil to produce the emulsion of the fuel oil, the specific gravity of the fuel oil to be actually used can be actually measured by the first specific gravity measuring unit and can be monitored in real time at all times or as needed, and the amount of water added to the fuel oil or both the amount of fuel oil and the amount of water can be adjusted by using the first measured specific gravity actually measured and obtained by the first specific gravity measuring unit.

To be specific, for example, even in a case where the specific gravity of the fuel oil is unknown or just recognized as a standard value, a case where plural types of fuel oil having different specific gravities need to be used when adding the water to the fuel oil to produce the water-emulsion fuel, or a case where the specific gravity has changed due to the change in the property of the fuel oil, the specific gravity of the fuel oil to be actually used is measured by the first specific gravity measuring unit, and the amount of water added to the fuel oil is adjusted by using the first measured specific gravity obtained by the first specific gravity measuring unit. Therefore, the water-emulsion fuel having the desired, accurate target water addition weight ratio can be produced.

The specific gravity monitoring controller according to the present invention may include: a second specific gravity measuring unit configured to measure a specific gravity of the water-emulsion fuel produced by adding the water to the fuel oil; a water addition ratio adjusting portion configured to calculate a measured water addition weight ratio of the water-emulsion fuel by using the second measured specific gravity measured and obtained by the second specific gravity measuring unit and the first measured specific gravity; and an output unit configured to output the measured water addition weight ratio.

With this, the specific gravity of the actual water-emulsion fuel produced by adding the water to the fuel oil can be measured by the second specific gravity measuring unit and can be monitored in real time at all times or as needed, and the measured water addition weight ratio of the water-emulsion fuel actually produced can be calculated by the water addition ratio adjusting portion by using the second measured specific gravity of the actually-produced water-emulsion fuel measured and obtained by the second specific gravity measuring unit and the first measured specific gravity of the fuel oil actually used. Then, the measured water addition weight ratio can be output by the output unit.

With this, whether or not the measured water addition weight ratio of the water-emulsion fuel actually produced falls within a range of an acceptable water addition weight ratio can be monitored by an operator or a device at all times or as needed.

In the specific gravity monitoring controller according to the present invention, a specific gravity of the water may be measured by a third specific gravity measuring unit, the measured water addition weight ratio of the water-emulsion fuel may be calculated by the water addition ratio adjusting portion by using the third measured specific gravity measured and obtained by the third specific gravity measuring unit and the first and second measured specific gravities, and the measured water addition weight ratio may be output by the output unit.

With this, the specific gravity of the actual water added to the fuel oil can be measured by the third specific gravity measuring unit and can be monitored in real time at all times or as needed, and the measured water addition weight ratio of the water-emulsion fuel actually produced can be calculated by the water addition ratio adjusting portion by using the third measured specific gravity of the actually-used water measured and obtained by the third specific gravity measuring unit, the first measured specific gravity of the fuel oil actually used, and the second measured specific gravity of the water-emulsion fuel actually produced. Then, the measured water addition weight ratio can be output by the output unit.

With this, whether or not the measured water addition weight ratio of the water-emulsion fuel actually produced falls within the range of the acceptable water addition weight ratio can be monitored by an operator or a device at all times or as needed.

In the specific gravity monitoring controller according to the present invention, the water addition ratio adjusting portion may adjust the amount of the water added to the fuel oil or adjust both the amount of the fuel oil and the amount of the water based on the measured water addition weight ratio calculated and obtained by the water addition ratio adjusting portion such that the water-emulsion fuel having the desired target water addition weight ratio is able to be produced.

The water addition ratio adjusting portion configured as above can adjust the amount of water added to the fuel oil or adjust both the amount of fuel oil and the amount of water based on the measured water addition weight ratio of the actually-produced water-emulsion fuel such that the water-emulsion fuel having the desired target water addition weight ratio is able to be produced.

With this, the water addition weight ratio of the water-emulsion fuel actually produced can be caused to be equal to the target water addition weight ratio or fall within the range of the acceptable water addition weight ratio. As a result, it is possible to prevent a problem in which the water-emulsion fuel having an unexpected water addition weight ratio is produced and supplied to an internal combustion engine, a boiler, or the like, and the internal combustion engine, the boiler, or the like is operated for a long period of time.

Therefore, the internal combustion engine, the boiler, or the like configured to use the water-emulsion fuel can be operated with appropriate, stable combustion efficiency, and the $NO_X$ components in the exhaust gas can be effectively reduced.

In the specific gravity monitoring controller according to the present invention, each of the specific gravity measuring units may include a mass flow rate measuring function and a volume flow rate measuring function.

The specific gravity measuring unit can calculate the specific gravities of the fuel oil, the water-emulsion fuel, and the water by dividing the measured mass flow rate of each of the fuel oil, the water-emulsion fuel, and the water by the corresponding measured volume flow rate.

In the specific gravity monitoring controller according to the present invention, the water addition ratio adjusting portion may realize the production of the water-emulsion fuel having the desired target water addition weight ratio by adjusting the amount of the water added to the fuel oil or adjusting both the amount of the fuel oil and the amount of the water by using temperature-corrected measured specific gravities obtained by performing temperature corrections of the measured specific gravities.

As above, the water-emulsion fuel having the desired target water addition weight ratio can be accurately produced without being affected by temperatures by adjusting the amount of water added to the fuel oil or adjusting both the amount of fuel oil and the amount of water by using the temperature-corrected measured specific gravities obtained by performing the temperature corrections of the measured specific gravities of the fuel oil, the water-emulsion fuel, and the water.

In the specific gravity monitoring controller according to the present invention, when a total of flow rates of the fuel oil and the water used to produce the water-emulsion fuel having the desired water addition weight ratio becomes equal to or higher than a predetermined upper limit total flow rate, the water addition ratio adjusting portion may limit a supply flow rate of the water such that the total becomes lower than the predetermined upper limit total flow rate.

The above case where the total of the flow rates of the fuel oil and water becomes equal to or higher than the predetermined upper limit total flow rate may occur in a case where, for example, when the specific gravity of the fuel oil is high at the time of producing the water-emulsion fuel having the desired target water addition weight ratio, the supply flow rate of the water becomes high. In such a case, by limiting the supply flow rate of the water, the fuel supply apparatus and accompanying devices for supplying the water-emulsion fuel to the internal combustion engine, the boiler, or the like can be prevented from being operated in a state where, for example, the flow rate exceeds the rated supply flow rate. With this, the fuel supply apparatus and the like can be operated appropriately, the internal combustion engine or the like configured to use the water-emulsion fuel can be operated with appropriate, stable combustion efficiency, and the $NO_X$ components in the exhaust gas can be effectively reduced. Then, although the supply flow rate of the water is limited, the supply flow rate of the fuel oil is not limited, so that the internal combustion engine, the boiler, or the like can be operated at set power.

A fuel supply apparatus according to the present invention includes the specific gravity monitoring controller according to the present invention, wherein the water-emulsion fuel produced by adjusting the amount of the water added to the fuel oil or adjusting both the amount of the fuel oil and the amount of the water by using the specific gravity monitoring controller is able to be supplied to an internal combustion engine or a boiler by using a fuel supply pump.

According to the fuel supply apparatus of the present invention, the water-emulsion fuel produced by using the specific gravity monitoring controller of the present invention can be supplied to the internal combustion engine or the boiler by using the fuel supply pump.

With this, as described above, the internal combustion engine, the boiler, or the like configured to use the water-emulsion fuel can be surely operated with appropriate, stable combustion efficiency, and the $NO_X$ components in the exhaust gas can be effectively reduced.

### Advantageous Effects of Invention

According to the specific gravity monitoring controller and fuel supply apparatus of the present invention, the specific gravity of the fuel oil to be actually used can be measured by the first specific gravity measuring unit, and the amount of water added to the fuel oil or both the amount of fuel oil and the amount of water can be adjusted by using the first measured specific gravity obtained by the first specific gravity measuring unit. Therefore, for example, in a case where the specific gravity monitoring controller is applied to an internal combustion engine of a ship, and even in a case where the specific gravity has changed due to the change in the property of the fuel oil put in this ship, a case where plural types of fuel oil having different properties are put in the ship at various regions and these plural types of fuel oil having various specific gravities are used, or a case where the mixture of these plural types of fuel oil having various specific gravities is used, the water-emulsion fuel having the desired, accurate target water addition weight ratio can be produced.

With this, the internal combustion engine, the boiler, or the like configured to use the water-emulsion fuel can be operated with appropriate, stable combustion efficiency, and the $NO_X$ components in the exhaust gas can be effectively reduced.

### Brief Description of Drawings

[Fig. 1] Fig. 1 is a circuit diagram showing a fuel supply apparatus including a specific gravity monitoring controller according to Embodiment 1 of the present invention.

### Description of Embodiments

Hereinafter, one embodiment of a fuel supply apparatus including a specific gravity monitoring controller according to the present invention (hereinafter may be simply referred to as a "fuel supply apparatus") will be explained in reference to Fig. 1. As shown in Fig. 1, a fuel supply apparatus 12 including a specific gravity monitoring controller 11 can add water, stored in a water tank 14, to fuel oil (for example, Bunker C), stored in a fuel tank 13, to produce water-emulsion fuel and can supply the water-emulsion fuel to a diesel engine 15 connected to the fuel supply apparatus 12.

Then, the fuel supply apparatus 12 can adjust a water addition weight ratio $S\gamma$ of the water-emulsion fuel, actually produced and supplied to the diesel engine 15, such that the water addition weight ratio $S\gamma$ becomes equal to, for example, a preset target water addition weight ratio $T\gamma$ or falls within a range of acceptable water addition weight ratios $K\gamma1$ to $K\gamma2$. As a result, the fuel supply apparatus 12 can prevent a problem in which the water-emulsion fuel having an unexpected water addition weight ratio is produced and supplied to, for example, the diesel engine 15, and the diesel engine 15 is operated for a long period of time.

As shown in Fig. 1, the fuel supply apparatus 12 includes a fuel supply line 16, a water supply line 17, a circulation line 18, and a control portion 19. The fuel supply line 16 and the water supply line 17 are connected to the circulation line 18.

As shown in Fig. 1, the fuel tank 13, a first fuel supply pump 20, a first specific gravity measuring portion 21, and a first temperature measuring portion 22 are provided on the fuel supply line 16.

The fuel tank 13 can store the fuel oil. The fuel oil is, for example, Bunker C.

The first fuel supply pump 20 can supply the fuel oil, stored in the fuel tank 13, to a mixer 23 provided on the circulation line 18. The first fuel supply pump 20 is provided on a portion of the fuel supply line 16 (pipe) connecting an outlet of the fuel tank 13 and an inlet of the mixer 23. The first fuel supply pump 20 is configured to be driven by an electric motor, not shown.

The first specific gravity measuring portion 21 can measure a first measured specific gravity *go* of the fuel oil supplied to the circulation line 18 by the first fuel supply pump 20 and can output the obtained first measured specific gravity *go* to the control portion 19. Then, the first specific gravity measuring portion 21 has a mass flow rate measuring function and a volume flow rate measuring function and includes, for example, a Coriolis mass flowmeter.

The first specific gravity measuring portion 21 can measure the mass flow rate and volume flow rate of the fuel oil supplied through the fuel supply line 16 to the circulation line 18. By this measurement, the first specific gravity measuring portion 21 can obtain the measured mass flow rate and the measured volume flow rate. Then, the first specific gravity measuring portion 21 can obtain the first measured specific gravity *go* of the fuel oil by dividing the measured mass flow rate by the measured volume flow rate and can output the first measured specific gravity *go* to the control portion 19.

The first temperature measuring portion 22 can measure a first measured temperature *to* of the fuel oil supplied to the circulation line 18 by the first fuel supply pump 20 and can output the first measured temperature *to* to the control portion 19.

As shown in Fig. 1, the water tank 14, a water supply pump 24, a third specific gravity measuring portion 25, and a third temperature measuring portion 26 are provided on the water supply line 17.

The water tank 14 can store the water, and the water supply pump 24 is connected to an outlet of the water tank 14.

The water supply pump 24 can supply the water, stored in the water tank 14, to the mixer 23 and is provided on a portion of the water supply line 17 (pipe) connecting the outlet of the water tank 14 and the inlet of the mixer 23. The water supply pump 24 is configured to be driven by an electric motor, not shown.

The third specific gravity measuring portion 25 can measure a third measured specific gravity *gw* of the water supplied to the circulation line 18 by the water supply pump 24 and can output the third measured specific gravity *gw* to the control portion 19. As with the first specific gravity measuring portion 21, the third specific gravity measuring portion 25 has the mass flow rate measuring function and the volume flow rate measuring function and includes, for example, a Coriolis mass flowmeter.

The third specific gravity measuring portion 25 can measure the mass flow rate and volume flow rate of the water supplied through the water supply line 17 to the circulation line 18. By this measurement, the third specific gravity measuring portion 25 can obtain the measured mass flow rate and the measured volume flow rate. Then, the third specific gravity measuring portion 25 can obtain the third measured specific gravity *gw* of the water by dividing the measured mass flow rate by the measured volume flow rate and can output the third measured specific gravity *gw* to the control portion 19.

The third temperature measuring portion 26 can measure a third measured temperature *tw* of the water supplied to the circulation line 18 by the water supply pump 24 and can output the third measured temperature *tw* to the control portion 19.

As shown in Fig. 1, the mixer 23, a second specific gravity measuring portion 27, a second temperature measuring portion 28, a second fuel circulation pump 29, a heater 30, the diesel engine 15, and a return chamber 31 are provided on the circulation line 18.

As shown in Fig. 1, a meeting portion 32 where the fuel supply line 16 and the circulation line 18 meet is provided between the return chamber 31 and the mixer 23.

The mixer 23 can mix and stir the fuel oil supplied by the first fuel supply pump 20 and the water supplied by the water supply pump 24 to produce the water-emulsion fuel. The water-emulsion fuel produced with the mixer 23 is supplied to the second specific gravity measuring portion 27 provided downstream of the mixer 23.

The second specific gravity measuring portion 27 can measure a second measured specific gravity *ge* of the water-emulsion fuel circulating in the circulation line 18 in a direction indicated by arrows by an ejection force of the second fuel circulation pump 29 and can output the second measured specific gravity *ge* to the control portion 19. As with the first specific gravity measuring portion 21, the second specific gravity measuring portion 27 has the mass flow rate measuring function and the volume flow rate measuring function and includes, for example, a Coriolis mass flowmeter.

The second specific gravity measuring portion 27 can measure the mass flow rate and volume flow rate of the water-emulsion fuel circulating in the circulation line 18 in the direction indicated by the arrows shown in Fig. 1 by the ejection force of the second fuel circulation pump 29. By this measurement, the second specific gravity measuring portion 27 can obtain the measured mass flow rate and the measured volume flow rate. Then, the second specific gravity measuring portion 27 can obtain the second measured specific gravity *ge* of the water-emulsion fuel by dividing the measured mass flow rate by the measured volume flow rate and can output the second measured specific gravity *ge* to the control portion 19.

The second temperature measuring portion 28 can measure a second measured temperature *te* of the water-emulsion fuel circulating in the circulation line 18 and can output the second measured temperature *te* to the control portion 19.

The second fuel circulation pump 29 can increase the pressure of the water-emulsion fuel or fuel oil (fuel) in the circulation line 18 (pipe) to predetermined pressure and can supply the fuel of increased pressure to the diesel engine 15. The second fuel circulation pump 29 is configured to be driven by an electric motor, not shown.

The heater 30 can heat the water-emulsion fuel or fuel oil, ejected from the second fuel circulation pump 29 to be supplied to the diesel engine 15, to a predetermined temperature and allows the heated fuel to be supplied to the diesel engine 15.

The heater 30 can heat the fuel, such as the water-emulsion fuel, to a predetermined temperature to reduce the viscosity of the fuel such that the viscosity of the fuel becomes viscosity appropriate for the diesel engine 15.

The return chamber 31 is a chamber for returning the water-emulsion fuel, unconsumed in the diesel engine 15, to the mixer 23 through the circulation line 18.

As above, the circulation line 18 shown in Fig. 1 is a circular line through which the fuel can flow and circulate in a predetermined arrow direction (counterclockwise direction). To be specific, when the diesel engine 15 consumes the fuel, such as the water-emulsion fuel, the fuel, such as the water-emulsion fuel, circulating in the circulation line 18 is supplied to the diesel engine 15. Then, to compensate for the fuel consumed in the diesel engine 15, the fuel oil is supplied to the circulation line 18 through the mixer 23 by the first fuel supply pump 20, and the water is supplied to the circulation line 18 through the mixer 23 by the water supply pump 24.

The diesel engine 15 (internal combustion engine) is a diesel engine fixed to and used on land or a diesel engine used for a transport machine. In the present embodiment, the diesel engine 15 is a diesel engine of a ship. Then, this diesel engine of the ship can be used for electric power generation or propulsion drive.

According to the fuel supply apparatus 12 configured as above and including the specific gravity monitoring controller 11 shown in Fig. 1, the water-emulsion fuel obtained by mixing and stirring the fuel oil (for example, Bunker C), stored in the fuel tank 13, and the water, stored in the water tank 14, with the mixer 23 can be supplied through the circulation line 18 to the diesel engine 15.

Next, the control portion 19 shown in Fig. 1 will be explained. The control portion 19 is constituted by a central processing unit (CPU) and performs various calculation operations by programs prestored in a storage portion, not shown. The control portion 19 includes a water addition ratio adjusting portion 33.

Then, the specific gravity monitoring controller 11 of the present invention is constituted by the control portion 19 shown in Fig. 1, and the first fuel supply pump 20, the first specific gravity measuring portion 21, the first temperature measuring portion 22, the second specific gravity measuring portion 27, the second temperature measuring portion 28, the water supply pump 24, the third specific gravity measuring portion 25, and the third temperature measuring portion 26, which are connected to the control portion 19.

When adding the water to the fuel oil to produce an emulsion of the fuel oil by using the fuel supply apparatus 12 shown in Fig. 1, the water addition ratio adjusting portion 33 can control a water ejection flow rate of the water supply pump 24 by using the first measured specific gravity *go* measured and obtained by the first specific gravity measuring portion 21 and the third measured specific gravity *gw* measured and obtained by the third specific gravity measuring portion 25 such that the water-emulsion fuel having the preset, desired target water addition weight ratio $T\gamma$ can be produced.

According to the fuel supply apparatus 12 configured as above, when adding the water to the fuel oil to produce the emulsion of the fuel oil, the specific gravity of the fuel oil to be actually used can be actually measured by the first specific gravity measuring portion 21 and can be displayed on a display portion (not shown) in real time or output by a sound output portion (not shown) in real time. With this, the first measured specific gravity *go* of the fuel oil to be actually used can be monitored by an operator or a device at all times or as needed.

Then, the amount of water added to the fuel oil can be adjusted by controlling the water ejection flow rate of the water supply pump 24 by using the first measured specific gravity *go* actually measured and obtained by the first specific gravity measuring portion 21.

To be specific, for example, even in a case where the specific gravity of the fuel oil is unknown or just recognized as the standard value, a case where plural types of fuel oil having different specific gravities need to be used when adding the water to the fuel oil to produce the water-emulsion fuel, or a case where the specific gravity has changed due to the change in the property of the fuel oil, the specific gravity of the fuel oil to be actually used is measured by the first specific gravity measuring portion 21, and the amount of water added to the fuel oil is adjusted by using the first measured specific gravity *go* of the fuel oil. Therefore, the water-emulsion fuel having the desired, accurate target water addition weight ratio $T\gamma$ can be produced and supplied to the diesel engine 15.

Then, according to the fuel supply apparatus 12, in order to be able to produce the water-emulsion fuel having the target water addition weight ratio $T\gamma$, the amount of water added to the fuel oil is adjusted by controlling the water ejection flow rate of the water supply pump 24. However, since the supply flow rate of the fuel oil is not adjusted, the diesel engine 15 can be operated at set power.

In addition, according to the fuel supply apparatus 12, the specific gravity of the actual water to be added to the fuel oil can be measured by the third specific gravity measuring portion 25, and as with the above, the third measured specific gravity *gw* can be displayed on the display portion (not shown) in real time or output by the sound output portion (not shown) in real time. With this, the third measured specific gravity *gw* of the water to be actually used can be monitored by an operator or a device at all times or as needed.

Then, the amount of water added to the fuel oil can be adjusted by controlling the water ejection flow rate of the water supply pump 24 by using the third measured specific gravity *gw* actually measured and obtained by the third specific gravity measuring portion 25. Therefore, the water-emulsion fuel having the desired, accurate target water addition weight ratio $T\gamma$ can be produced and supplied to the diesel engine 15.

Then, even in a case where the fuel supply apparatus 12 is applied to, for example, the diesel engine 15 of a ship, and a case where plural types of fuel oil having different properties are put in this ship at various regions and these plural types of fuel oil having various specific gravities are used or a case where the mixture of these plural types of fuel oil having various specific gravities is used, the water-emulsion fuel having the desired, accurate target water addition weight ratio Tγ can be produced.

With this, the diesel engine 15 configured to use the water-emulsion fuel can be operated with appropriate, stable combustion efficiency, and the $NO_X$ components in the exhaust gas can be effectively reduced.

Then, when producing the water-emulsion fuel by using the fuel supply apparatus 12 shown in Fig. 1, the measured water addition weight ratio Sγ of the water-emulsion fuel is calculated by the water addition ratio adjusting portion 33 by using the first measured specific gravity *go* measured and obtained by the first specific gravity measuring portion 21, the second measured specific gravity *ge* measured and obtained by the second specific gravity measuring portion 27, and the third measured specific gravity *gw* measured and obtained by the third specific gravity measuring portion 25, and the measured water addition weight ratio $S_γ$ is output by an output portion. This output portion is, for example, a display portion or a sound output portion.

According to the fuel supply apparatus 12, the specific gravity of the actual water-emulsion fuel obtained by adding the water to the fuel oil can be measured by the second specific gravity measuring portion 27 and can be displayed on the display portion (not shown) in real time or output by the sound output portion (not shown) in real time. With this, the second measured specific gravity *ge* of the water-emulsion fuel actually produced can be monitored by an operator or a device at all times or as needed.

Then, the measured water addition weight ratio Sγ of the water-emulsion fuel actually produced can be calculated by the water addition ratio adjusting portion 33 by using the second measured specific gravity *ge* of the actually produced water-emulsion fuel, the second measured specific gravity *ge* being measured and obtained by the second specific gravity measuring portion 27, the first measured specific gravity *go* of the fuel oil actually used, and the third measured specific gravity *gw* of the water actually used. Then, the measured water addition weight ratio Sγ can be output by an output unit (a display portion, a sound output portion).

With this, whether or not the measured water addition weight ratio Sγ of the water-emulsion fuel actually produced falls within the range of the acceptable water addition weight ratios Kγ1 to Kγ2 can be monitored by an operator or a device at all times or as needed.

The water addition ratio adjusting portion 33 is configured to be able to control the water ejection flow rate of the water supply pump 24 such that the water-emulsion fuel having the set target water addition weight ratio Tγ can be produced based on the measured water addition weight ratio Sγ calculated and obtained as above.

The measured water addition weight ratio Sγ is calculated and obtained by the water addition ratio adjusting portion 33 by using the first measured specific gravity *go* of the fuel oil, the second measured specific gravity *ge* of the water-emulsion fuel, and the third measured specific gravity *gw* of the water.

According to the fuel supply apparatus 12 configured as above, the amount of water added to the fuel oil can be adjusted by controlling the water ejection flow rate of the water supply pump 24 based on the measured water addition weight ratio Sγ of the actually-produced water-emulsion fuel such that the water-emulsion fuel having the desired target water addition weight ratio Tγ can be produced.

With this, the fuel supply apparatus 12 can perform feedback control such that the water addition weight ratio Sγ of the water-emulsion fuel actually produced becomes equal to the target water addition weight ratio Tγ or falls within the range of the acceptable water addition weight ratios Kγ1 to Ky2 and can accurately produce the water-emulsion fuel having the set target water addition weight ratio Tγ.

As a result, the fuel supply apparatus 12 can prevent a problem in which the water-emulsion fuel having an unexpected water addition weight ratio γ is produced and supplied to, for example, the diesel engine 15, and the diesel engine 15 is operated for a long period of time. Therefore, the diesel engine 15 configured to use the water-emulsion fuel can be operated with appropriate, stable combustion efficiency, and the $NO_X$ components in the exhaust gas can be effectively reduced.

Further, the water addition ratio adjusting portion 33 is configured to be able to perform temperature corrections of the first measured specific gravity *go* of the fuel oil, the second measured specific gravity *ge* of the water-emulsion fuel, and the third measured specific gravity *gw* of the water and control and adjust the water ejection flow rate of the water supply pump 24 by using a first temperature-corrected measured specific gravity of the fuel oil, a second temperature-corrected measured specific gravity of the water-emulsion fuel, and a third temperature-corrected measured specific gravity of the water, these temperature-corrected measured specific gravities being obtained by the above temperature corrections, such that the water-emulsion fuel having the target water addition weight ratio Tγ can be produced.

According to the fuel supply apparatus 12, the temperature corrections of the first measured specific gravity *go* of the fuel oil, the second measured specific gravity *ge* of the water-emulsion fuel, and the third measured specific gravity *gw* of the water can be performed, and the amount of water added to the fuel oil can be adjusted by using the obtained first to third temperature-corrected measured specific gravities. As a result, the water-emulsion fuel having the target water addition weight ratio Tγ can be accurately produced without being affected by temperatures and can be supplied to the diesel engine 15.

The following will explain one example of a method of calculating the measured water addition weight ratio Sγ of the water-emulsion fuel by the water addition ratio adjusting portion 33 by using the first measured specific gravity *go* measured and obtained by the first specific gravity measuring portion 21, the second measured specific gravity *ge* measured and obtained by the second specific gravity measuring portion 27, and the third measured specific gravity *gw* measured and obtained by the third specific gravity measuring portion 25.

Here, a water concentration (weight base) of the water-emulsion fuel is denoted by x (%), the weight of the water-emulsion fuel is denoted by Q, the volume of water contained in the water-emulsion fuel of the weight Q is denoted by S1, the volume of the fuel oil is denoted by S2, and the volume of the water-emulsion fuel is denoted by S3.

$$\text{Volume S1 of Water} = (x/100)\times Q\times(1/gw)\ \text{... Formula 1}$$

$$\text{Volume S2 of Fuel Oil} = \{(100 - x)/100\}\times Q\times(1/go)\ \text{... Formula 2}$$

$$\text{Volume S3 of Water-emulsion Fuel} = Q\times(1/ge)\ \text{... Formula 3}$$

$$S1 + S2 = S3\ \text{... Formula 4}$$

Based on Formulas 1 to 4, the water concentration (weight base) x (%) of the water-emulsion fuel is represented as below.

$$x\ (\%) = \{gw(go - ge)\}/\{ge(go - gw)\}\times 100\ (\%)\ \text{... Formula 5}$$

Therefore, the measured water addition weight ratio Sγ (%) is represented as below.

$$S\gamma\ (\%) = \{x/(100 - x)\}\times 100\ (\%)\ \text{... Formula 6}$$

On this account, the following is obtained by substituting Formula 5 in Formula 6.

$$S\gamma\ (\%) = \{gw(go - ge)\}/\{go(ge - gw)\}\times 100\ (\%)\ \text{... Formula 7}$$

Thus, the measured water addition weight ratio Sγ (%) can be obtained.

As above, by substituting *go, ge,* and *gw* in Formula 7, the measured water addition weight ratio Sγ can be obtained.

The following will explain a specific example of a control procedure for controlling the mass flow rate of the added water for the purpose of causing the obtained measured water addition weight ratio Sγ to be close to the target water addition weight ratio Tγ.

Here, the target water addition weight ratio is denoted by Tγ, the measured water addition weight ratio is denoted by Sγ, the measured mass flow rate (Kg/h) of the fuel oil is denoted by Sf (this Sf is obtained by the first specific gravity measuring portion 21), the measured mass flow rate (Kg/h) of the water is denoted by Sw (this Sw is obtained by the third specific gravity measuring portion 25), and the target mass flow rate (Kg/h) of the water is denoted by Tw. Then, the target mass flow rate Tw of the water can be obtained as below.

$$Tw = T\gamma\times Sf\ (\text{Kg/h})\ \text{... Formula 8}$$

This Tγ is a set value, and Sf is a value that changes in accordance with the specific gravity of the fuel oil and the change in the amount of consumption of the fuel oil. Therefore, Tw is a value that changes in accordance with Sf.

Therefore, by controlling the amount of water supplied by the water supply pump 24 such that the measured mass flow rate Sw of the water becomes equal to the target mass flow rate Tw of the water, the measured water addition weight ratio Sγ can be caused to be close to the target water addition weight ratio Tγ. As a result, the appropriate water-emulsion fuel can be supplied to the diesel engine 15.

Here, it is preferable that the measured mass flow rate Sw obtained by "$S\gamma \times Sf = Sw$" be used as the measured mass flow rate Sw of the water. This $S\gamma$ is the measured water addition weight ratio measured by the second specific gravity measuring portion 27 provided on the circulation line 18.

With this, the measured mass flow rate Sw of the water can be obtained by using the measured water addition weight ratio $S\gamma$ of the water-emulsion fuel actually flowing in the circulation line 18, and the water-emulsion fuel having the ratio extremely close to the target water addition weight ratio $T\gamma$ can be actually supplied to the diesel engine 15 by controlling the amount of water supplied by the water supply pump 24 such that the obtained measured mass flow rate Sw of the water becomes equal to the target mass flow rate Tw of the water.

Needless to say, the measured water addition weight ratio $S\gamma$ of the water-emulsion fuel may be obtained by a method other than the above. Then, the amount of water which should be adjusted for the purpose of causing the obtained measured water addition weight ratio $S\gamma$ to be close to the target water addition weight ratio $T\gamma$ may be obtained by a method other than the above.

In the above embodiment, the water-emulsion fuel having the desired target water addition weight ratio $T\gamma$ is produced by adjusting the amount of water added to the fuel oil. However, instead of this, the water-emulsion fuel having the target water addition weight ratio $T\gamma$ may be produced by adjusting both the amount of fuel oil and the amount of water.

Then, in the above embodiment, the specific gravity of the water is measured by the third specific gravity measuring portion 25, and by using the third measured specific gravity *gw* measured and obtained by the third specific gravity measuring portion 25, the first measured specific gravity *go* of the fuel oil, and the second measured specific gravity *ge* of the water-emulsion fuel, the water-emulsion fuel having the target water addition weight ratio $T\gamma$ is produced, and the measured water addition weight ratio $S\gamma$ of the water-emulsion fuel is calculated and obtained by the water addition ratio adjusting portion 33. However, instead of this, by using a known value or standard value as the specific gravity of the water and using the first measured specific gravity *go* of the fuel oil, and the second measured specific gravity *ge* of the water-emulsion fuel, the water-emulsion fuel having the target water addition weight ratio $T\gamma$ may be produced, and the measured water addition weight ratio $S\gamma$ of the water-emulsion fuel may be calculated and obtained by the water addition ratio adjusting portion 33.

One example of adopting the above is a case where the temperature control is performed such that the temperature of the water actually flowing in the fuel supply apparatus 12 becomes a predetermined temperature. Regarding the water, even in a case where the water is put and used in the ship at various regions, the specific gravity of the water is a substantially constant value unlike the fuel oil, and the error of the specific gravity of the water may be acceptable.

In addition, the foregoing has explained that each of the first to third specific gravity measuring portions 21, 27, and 25 of the above embodiment has the volume flow rate measuring function and the mass flow rate measuring function. However, a specific gravity measuring device capable of measuring the specific gravities of the fuel oil, the water-emulsion fuel, and the water by a method other than the above may be used.

Further, in the above embodiment, the first to third temperature measuring portions 22, 28, and 26 are provided, and the amount of water added to the fuel oil is adjusted by using the first to third temperature-corrected measured specific gravities obtained by performing the temperature corrections of the first to third measured specific gravities *go, ge,* and *gw*. With this, the water-emulsion fuel having the desired target water addition weight ratio $T\gamma$ is produced. However, instead of this, without providing the first to third temperature measuring portions 22, 28, and 26, the amount of water added to the fuel oil may be adjusted by using the first to third measured specific gravities *go, ge,* and *gw* which are not temperature-corrected, and with this, the water-emulsion fuel having the desired target water addition weight ratio $T\gamma$ may be produced.

One example of the above case where the temperature corrections of the first to third measured specific gravities *go, ge,* and *gw* are not performed is a case where: the temperature control is performed such that the temperatures of the fuel oil, the water-emulsion fuel, and the water actually flowing in the fuel supply apparatus 12 respectively become predetermined temperatures; and the temperatures and specific gravities of the fuel oil, the water-emulsion fuel, and the water actually flowing are known.

Then, in the above embodiment, the water addition ratio adjusting portion 33 adjusts the amount of water added to the fuel oil such that the water-emulsion fuel having the desired target water addition weight ratio $T\gamma$ can be produced. In addition to this, it is preferable that when the total of the flow rates of the fuel oil and water used to produce the water-emulsion fuel having the desired target water addition weight ratio $T\gamma$ (the total of the supply flow rate of the fuel oil in the fuel supply line 16 and the supply flow rate of the water in the water supply line 17) becomes equal to or higher than a predetermined upper limit total flow rate, the water addition ratio adjusting portion 33 reduce the total of the flow rates of the fuel oil and water to lower than the upper limit total flow rate by limiting the supply flow rate of the water in the water supply line 17 such that the supply flow rate of the water in the water supply line 17 becomes lower than an upper limit supply flow rate.

The above case where the total of the flow rates of the fuel oil and water becomes equal to or higher than the predetermined upper limit total flow rate may occur in a case where, for example, when the specific gravity of the fuel oil is high at the time of producing the water-emulsion fuel having the desired target water addition weight ratio Tγ, the supply flow rate of the water becomes high. In such a case, by limiting the supply flow rate of the water, the fuel supply apparatus 12 and accompanying devices for supplying the water-emulsion fuel to the internal combustion engine, such as the diesel engine 15, can be prevented from being operated in a state where, for example, the flow rate exceeds the rated supply flow rate.

With this, the fuel supply apparatus 12 and accompanying devices can be operated appropriately, the diesel engine 15 configured to use the water-emulsion fuel can be operated with appropriate, stable combustion efficiency, and the $NO_X$ components in the exhaust gas can be effectively reduced. Then, although the supply flow rate of the water is limited, the supply flow rate of the fuel oil is not limited, so that the diesel engine 15 can be operated at the set power.

In the above embodiment, as shown in Fig. 1, the specific gravity monitoring controller 11 and the fuel supply apparatus 12 according to the present invention are applied to the fuel supply apparatus 12 configured to add the water to the fuel oil to produce the water-emulsion fuel having the desired target water addition weight ratio Tγ and then supply the water-emulsion fuel to the diesel engine 15. In addition, the specific gravity monitoring controller 11 and the fuel supply apparatus 12 according to the present invention are also applicable to a fuel supply apparatus configured to add the water and an additive (for example, surfactant) to the fuel oil to produce the water-emulsion fuel having the desired target water addition weight ratio Tγ and then supply the water-emulsion fuel to the diesel engine 15.

Further, the above embodiment has explained an example in which the present invention is applied to the diesel engine 15 of a ship. In addition, the present invention is also applicable to, for example, internal combustion engines and boilers used on land.

## Industrial Applicability

As above, the specific gravity monitoring controller according to the present invention and the fuel supply apparatus including the specific gravity monitoring controller have an excellent effect in which: the specific gravity of the fuel oil actually used can be measured and monitored when adding the water to the fuel oil to produce the water-emulsion fuel; and the water-emulsion fuel having the accurate target water addition weight ratio can be produced by adjusting the amount of water added to the fuel oil by using the obtained specific gravity of the fuel oil. The specific gravity monitoring controller according to the present invention and the fuel supply apparatus including the specific gravity monitoring controller are suitably applied to a specific gravity monitoring controller and a fuel supply apparatus including the specific gravity monitoring controller.

## Reference Signs List

| | |
|---|---|
| 11 | specific gravity monitoring controller |
| 12 | fuel supply apparatus |
| 13 | fuel tank |
| 14 | water tank |
| 15 | diesel engine |
| 16 | fuel supply line |
| 17 | water supply line |
| 18 | circulation line |
| 19 | control portion |
| 20 | first fuel supply pump |
| 21 | first specific gravity measuring portion |
| 22 | first temperature measuring portion |
| 23 | mixer |
| 24 | water supply pump |
| 25 | third specific gravity measuring portion |
| 26 | third temperature measuring portion |
| 27 | second specific gravity measuring portion |
| 28 | second temperature measuring portion |
| 29 | second fuel circulation pump |
| 30 | heater |

(continued)

| | |
|---|---|
| 31 | return chamber |
| 32 | meeting portion |
| 33 | water addition ratio adjusting portion |
| *go* | first measured specific gravity of fuel oil |
| *ge* | second measured specific gravity of water-emulsion fuel |
| *gw* | third measured specific gravity of water |
| *to* | first measured temperature of fuel oil |
| *te* | second measured temperature of water-emulsion fuel |
| *tw* | third measured temperature of water |
| Sγ | measured water addition weight ratio |
| Tγ | target water addition weight ratio |
| Kγ1 to Kγ2 | acceptable water addition weight ratio |

## Claims

**1.** A specific gravity monitoring controller comprising
a first specific gravity measuring unit configured to measure a specific gravity of fuel oil when adding water to the fuel oil to produce an emulsion of the fuel oil, wherein
the specific gravity monitoring controller realizes production of a water-emulsion fuel having a desired target water addition weight ratio by adjusting an amount of the water added to the fuel oil or adjusting both an amount of the fuel oil and the amount of the water by using the first measured specific gravity measured and obtained by the first specific gravity measuring unit.

**2.** The specific gravity monitoring controller according to claim 1, further comprising:

a second specific gravity measuring unit configured to measure a specific gravity of the water-emulsion fuel produced by adding the water to the fuel oil;
a water addition ratio adjusting portion configured to calculate a measured water addition weight ratio of the water-emulsion fuel by using the second measured specific gravity measured and obtained by the second specific gravity measuring unit and the first measured specific gravity; and
an output unit configured to output the measured water addition weight ratio.

**3.** The specific gravity monitoring controller according to claim 2, wherein:

a specific gravity of the water is measured by a third specific gravity measuring unit;
the measured water addition weight ratio of the water-emulsion fuel is calculated by the water addition ratio adjusting portion by using the third measured specific gravity measured and obtained by the third specific gravity measuring unit and the first and second measured specific gravities; and
the measured water addition weight ratio is output by the output unit.

**4.** The specific gravity monitoring controller according to claim 2 or 3, wherein the water addition ratio adjusting portion adjusts the amount of the water added to the fuel oil or adjusts both the amount of the fuel oil and the amount of the water based on the measured water addition weight ratio calculated and obtained by the water addition ratio adjusting portion such that the water-emulsion fuel having the desired target water addition weight ratio is able to be produced.

**5.** The specific gravity monitoring controller according to any one of claims 1 to 3, wherein each of the specific gravity measuring units includes a mass flow rate measuring function and a volume flow rate measuring function.

**6.** The specific gravity monitoring controller according to claim 2 or 3, wherein the water addition ratio adjusting portion realizes the production of the water-emulsion fuel having the desired target water addition weight ratio by adjusting the amount of the water added to the fuel oil or adjusting both the amount of the fuel oil and the amount of the water by using temperature-corrected measured specific gravities obtained by performing temperature corrections of the measured specific gravities.

**7.** The specific gravity monitoring controller according to claim 2 or 3, wherein when a total of flow rates of the fuel oil and the water used to produce the water-emulsion fuel having the desired water addition weight ratio becomes equal to or higher than a predetermined upper limit total flow rate, the water addition ratio adjusting portion limits a supply flow rate of the water such that the total becomes lower than the predetermined upper limit total flow rate.

**8.** A fuel supply apparatus comprising
the specific gravity monitoring controller according to any one of claims 1 to 3, wherein
the water-emulsion fuel produced by adjusting the amount of the water added to the fuel oil or adjusting both the amount of the fuel oil and the amount of the water by using the specific gravity monitoring controller is able to be supplied to an internal combustion engine or a boiler by using a fuel supply pump.

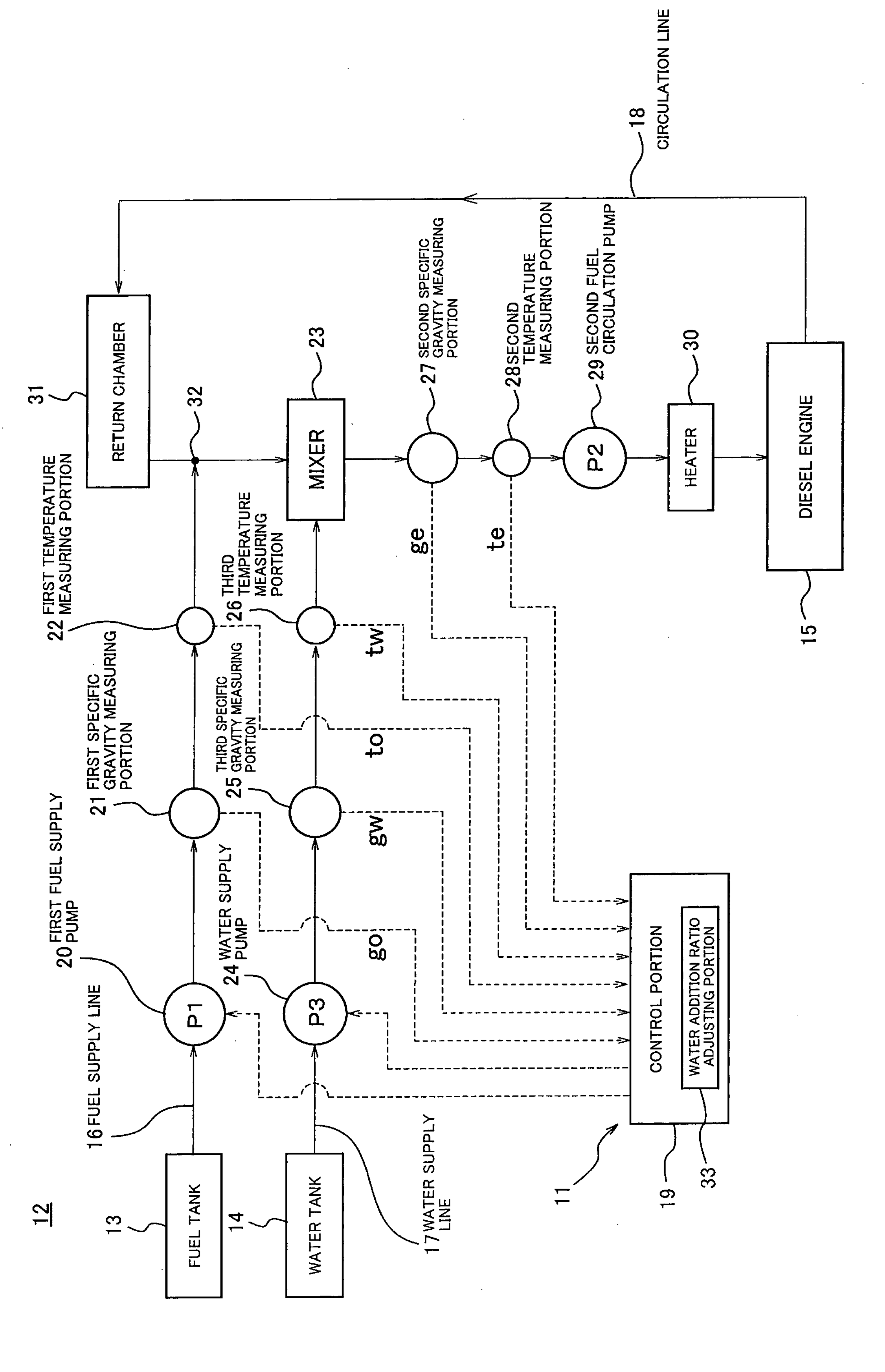
12
13 FUEL TANK
14 WATER TANK
16 FUEL SUPPLY LINE
17 WATER SUPPLY LINE
20 FIRST FUEL SUPPLY PUMP
P1
24 WATER SUPPLY PUMP
P3
21 FIRST SPECIFIC GRAVITY MEASURING PORTION
25 THIRD SPECIFIC GRAVITY MEASURING PORTION
22 FIRST TEMPERATURE MEASURING PORTION
26 THIRD TEMPERATURE MEASURING PORTION
31 RETURN CHAMBER
32
23 MIXER
27 SECOND SPECIFIC GRAVITY MEASURING PORTION
28 SECOND TEMPERATURE MEASURING PORTION
29 SECOND FUEL CIRCULATION PUMP
P2
30 HEATER
15 DIESEL ENGINE
18 CIRCULATION LINE
go
gw
to
tw
ge
te
11
19 CONTROL PORTION
33 WATER ADDITION RATIO ADJUSTING PORTION

**INTERNATIONAL SEARCH REPORT**

International application No.
PCT/JP2011/003107

A. CLASSIFICATION OF SUBJECT MATTER
*F23K5/12*(2006.01)i, *C10L1/32*(2006.01)i, *F02D19/12*(2006.01)i, *F02D25/02* (2006.01)i

According to International Patent Classification (IPC) or to both national classification and IPC

B. FIELDS SEARCHED

Minimum documentation searched (classification system followed by classification symbols)
F23K5/12, C10L1/32, F02D19/12, F02D25/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-84668 A (Kawasaki Heavy Industries, Ltd.), 15 April 2010 (15.04.2010), entire text & WO 2010/038420 A1 | 1-8 |
| A | JP 2010-150957 A (UD Trucks Corp.), 08 July 2010 (08.07.2010), entire text (Family: none) | 1-8 |
| A | JP 9-250736 A (Ishikawajima-Harima Heavy Industries Co., Ltd.), 22 September 1997 (22.09.1997), entire text (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 June, 2011 (22.06.11) | 05 July, 2011 (05.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/003107

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-161096 A (Daihatsu Diesel Mfg. Co., Ltd.), 13 June 2000 (13.06.2000), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9250736 A